# EUROPEAN PATENT APPLICATION

(11) **EP 2 378 326 A2**
(43) Date of publication of application: **19.10.2011**
(21) Application number: 11162059.7
(22) Date of filing: 12.04.2011
(51) Int. Cl.: G02B 6/00, F21V 8/00

(54) **Backlight device for a liquid crystal display**

(30) Priority: 19.04.2010 JP 2010096120
(71) Applicant: Hitachi Consumer Electronics Co. Ltd., Tokyo 100-0004 (JP)
(72) Inventor: Kubota, Hidenao, Chiyoda-ku, Tokyo 100-8220 (JP); Ouchi, Satoshi, Chiyoda-ku, Tokyo 100-8220 (JP)
(74) Representative: Hackney, Nigel John

(57) **Abstract**

In a liquid crystal display device, two light guide plates are arranged in parallel at a predetermined distance from each other to function as a backlight. The two light guide plates are provided between a liquid crystal display panel and a circuit substrate on which LEDs are mounted. Each of the light guide plates includes a plurality of divided light guide plates. Each of the divided light guide plates is divided into a plurality of light guide plate blocks by grooves. In opposed portions of the two light guide plates, side surfaces of the light guide plates are inclined. Then, a rough surface is formed on the respective inclined surfaces. Because of this shape, light interference easily occurs between the two light guide plates. As a result, it is possible to prevent lowering of brightness in the opposed portions of the two light guide plates.

## Description

The present invention relates to a liquid crystal display device using LEDs as a backlight. More particularly, the present invention relates to a relatively large liquid crystal display device used in thin televisions or other display devices that eliminate uneven brightness.

With the recent low power requirements, there is also a demand for low power consumption in liquid crystal backlight devices. Thus, area luminance control (local dimming) has been put into practice to meet this demand by dividing a backlight device into a plurality of blocks and controlling the luminance of each block independently. Here, the backlight device is divided into a plurality of blocks, which means that a light guide plate is divided into a plurality of blocks to be able to adjust the brightness of light sources provided in each of the blocks in each light guide plate.

JP-A No. 288611/1999 describes a configuration in which divided light guide plate blocks are arranged in tandem to form a planar light source device having a large light emitting area. According to JP-A No. 288611/1999, a fluorescent tube is used as a primary light source provided in each light guide plate block. In this case, by taking into account the brightness difference between the ends and the center of the fluorescent tube, the portion of the light guide plate block overlapping the adjacent light guide plate has a tongue shaped portion with notches formed therein, in order to prevent lack of brightness in the electrode portions at both ends of the primary light source. It is also described that the electrode portions at both ends of the primary light source are curved, and the curved electrode portions are provided on the outside of the light guide plate block.

Further, in JP-A No. 265635/2004, an acrylic plate is provided between the light guide plate and a diffusion sheet in order to prevent uneven brightness at the connected portion of the light guide plate blocks arranged in tandem. It is also described that when the acrylic plate is not used, a predetermined distance is set between the light guide plate and the diffusion sheet.

In the technology described in JP-A No. 288611/1999, a plurality of light guide plate blocks are arranged in a row so as to prevent uneven brightness occurring at the connected portion of the light guide plate blocks in the vicinity of the light source. Further, in the technology described in JP-A No. 265635/2004, a plurality of light guide plate blocks are arranged in rows and columns. The technology of JP-A No. 265635/2004 is also designed to prevent uneven brightness occurring at the connected portion of the light guide plate blocks in the vicinity of the light sources.

Meanwhile for a large screen, it is necessary to provide a large number of light guide plate blocks. In this case, if light guide plate blocks are combined into one light guide plate block to form a light guide plate, which is a problem in terms of production and handling techniques.

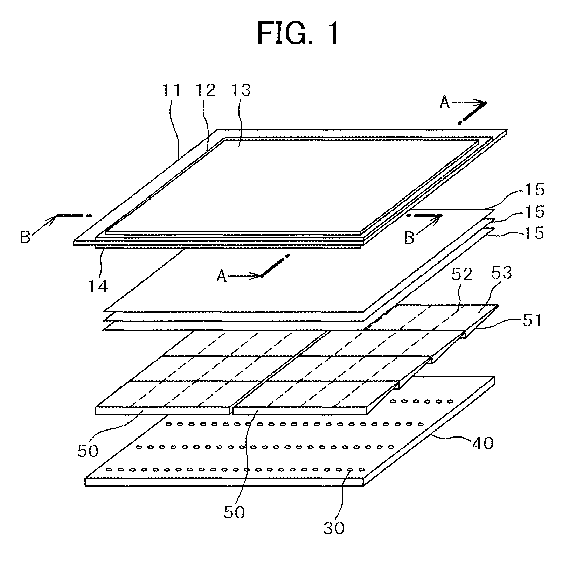

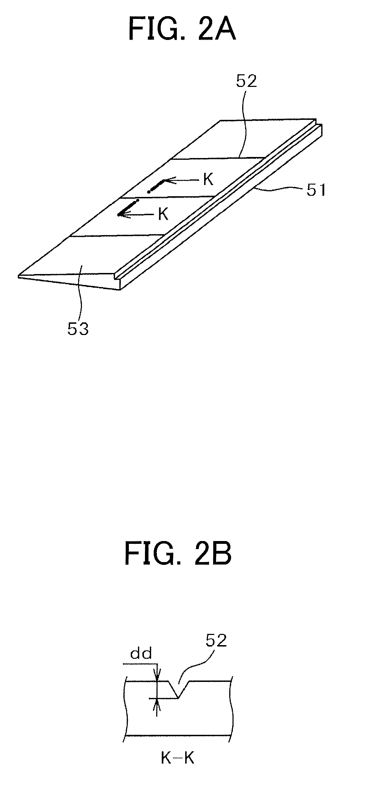

In order to solve such a problem, the present invention uses a configuration, as shown in Fig. 1, in which two light guide plates 50 are arranged in parallel to from a large light guide plate as whole. The light guide plate 50 are formed by connecting divided light guide plates 51, respectively, in which light guide plate blocks 53 are formed. Each of the light guide plates 50 in Fig. 1 is formed by combining the divided light guide plates 51. In other words, the divided light guide plate 51 is divided into a plurality of light guide plate blocks 53 by grooves 52. One light guide plate 50 shown in Fig. 1 is formed by combining the divided light guide plates 51 shown in Fig. 2.

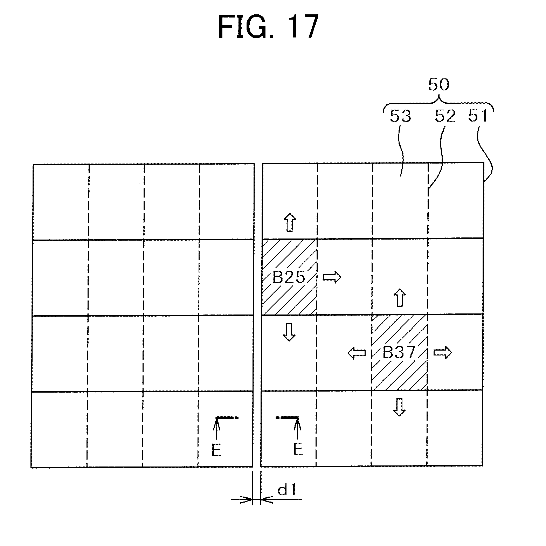

In this case, it is necessary to provide a predetermined distance between the two light guide plates 50 in order to absorb the thermal expansion of the light guide plates 50. Fig. 17 is a top view of the light guide plate 50 shown in Fig. 1 according to a conventional example. In Fig. 17, a distance d1 is formed between a first light guide plate 50 and a second light guide plate 50 to absorb the thermal expansion. The distance d1 is 0.2 mm to 0.5 mm.

Fig. 17 shows the way the light leaks among the light guide plate blocks. For example, as shown in Fig. 17, if only a B37 light guide plate block is bright, the light leaks into the adjacent blocks as indicated by the white arrows. However, there is the distance d1 between the first light guide plate 50 and the second light guide plate 50, in which the light may not easily travel between the first and second light guide plates 50.

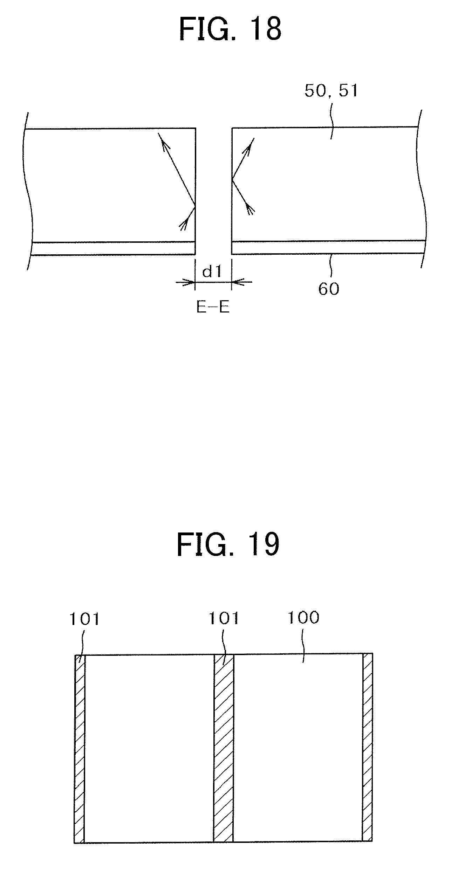

In Fig. 17, if a B25 light guide plate block is blight, the light of the B25 light guide plate block leaks into the neighboring light guide plate blocks, as indicated by the white arrows, in the same light guide plate. However, the light does not leak into the other light guide plate. This state is shown in Fig. 18. Fig. 18 is a cross-sectional view taken along line E-E of Fig. 17. As shown in Fig. 18, when the end portion of the light guide plate has a mirror surface, total internal reflection occurs more easily at the mirror surface. As a result, the light does not easily leak into the adjacent light guide plate. In Fig. 18, the light is reflected from a reflective sheet provided on the lower surface of the light guide plate 50 in each light guide plate 50. Then, the light is totally reflected at the mirror surface on the side of the light guide plate 50. Such a phenomenon causes the following two problems.

The first problem is that a vertical stripe uneven brightness 101 occurs in the center of the screen. This state is shown in Fig. 19. In Fig. 19, the vertical stripe low brightness portion 101 occurs in a screen 100 when an all white screen is displayed. Further, the vertical stripe low brightness portion 101 also exists on the left and right sides of the screen 100.

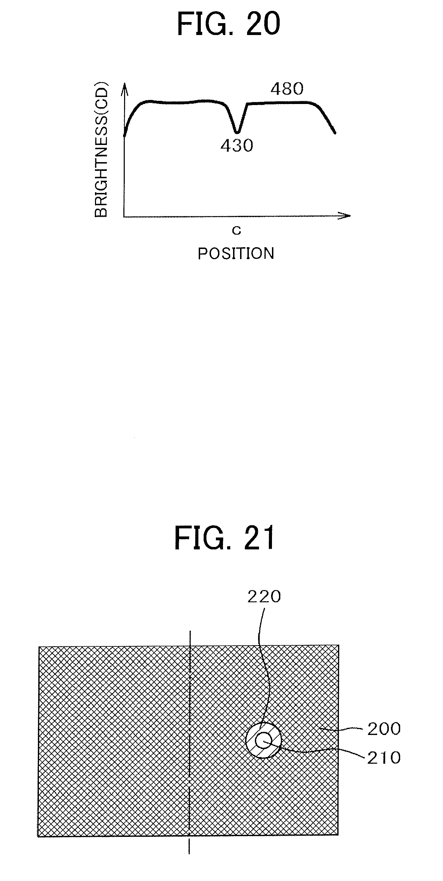

Fig. 20 shows this state in numerical form. In Fig. 20, the horizontal axis represents the position in the screen, and the vertical axis represents the brightness in the screen. The unit is candela (cd). In Fig. 20, the brightness is 480 candelas in most of the screen. However, the brightness is 430 candelas in the screen center c. This represents the vertical stripe portion of low brightness. In Fig. 20, the brightness is small in the periphery of the screen, which corresponds to the vertical stripe portion of low brightness in the vicinity of the left and right sides of the screen.

The vertical stripe portion of low brightness in the center is due to the influence of the distance d1 between the two light guide plates 50 as shown in Figs. 17 and 18. While the vertical stripe portion of low brightness portion is formed on the left and right sides of the screen, because the light guide plate block in the end portion has no adjacent light guide plate block on one side. Thus, the end guide plate block is not supplied with light from this side. Of the vertical stripe portions of low brightness, uneven brightness that occurs on the left and right sides of the screen is not visible. Thus, it is not an important problem. On the other hand, the vertical stripe portion of low brightness portion in the center is visible, thus causing a problem.

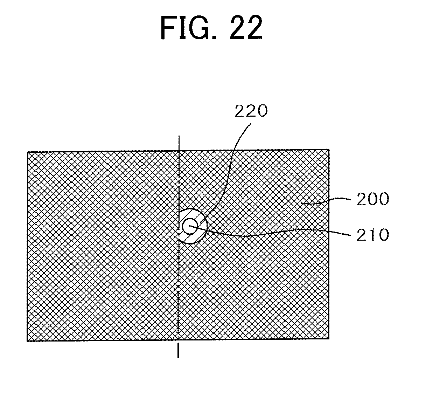

Another problem occurs in the case of video. This problem is described using Figs. 21 and 22. Figs. 21 and 22 show the case in which a white circle 210 moves from right to left in a dark screen 200. In Fig. 21, a halo 220 is present around the while circle 210. One of the causes of the halo 220 is that the light of the light guide plate block 53 leaks into the surrounding light guide plate blocks.

Fig. 22 shows that the white circle 210 moves to the left near the center of the screen. In Fig. 22, the halo 220 is present around the white circle 210. However, the halo 220 is present in the area of the same light guide plate 50, but not present in the area of the adjacent light guide plate 50. This is because the light of the white circle 210 does not leak into the adjacent light guide plate 50.

In general, the halo 210 is preferably not present. If the halo 210 is sometimes present and sometimes not, discomfort arises in the screen. As shown in Figs. 21 and 22, if there is a phenomenon in which a part of the halo 210 is lacking only in the center area of the screen, discomfort arises in the screen.

The object of the present invention is to solve the above problems. More specifically, when a plurality of light guide plates, which are formed by combining divided light guide plates having a plurality of light guide plate blocks, are arranged with a distance therebetween, it is desirable to prevent uneven brightness or an unnatural image from occurring in the portion of the distance between the light guide plates.

The present invention overcomes the above problems by the following means. That is, a first aspect of the present invention provides a liquid crystal display device including a liquid crystal display panel, a first light guide plate, a second light guide plate, and LED light sources. The first and second light guide plates include a plurality of divided light guide plates. The divided light guide plate is divided into a plurality of light guide plate blocks. Each of the plurality of light guide plate blocks is provided with LEDs. The first and second light guide plates are arranged in parallel with a distance therebetween. In the first and second light guide plates, each of the opposed side surfaces of the first and second light guide plates has a particular shape, and the predetermined surface is roughened. With this shape of the opposed side surfaces, the light from the first light guide plate is easily input to the second light guide plate, and the light from the second light guide plate is easily input to the first light guide plate.

Examples of the shape of the side surface are as follows: The side surface is inclined, and the inclined surface is roughened. Each of the side surfaces of the opposed portions of the two light guide plates is chamfered, and the chamfered surface is roughened. Each of the opposed portions of the two light guide plates are provided with a canopy, to increase the opposed area of the two light guide plates by overlapping the canopy portions. Each of the opposed side surfaces of the two light guide plates has a crank-like shape, to increase the opposed area of the two light guide plates by overlapping the crank-like shaped side surfaces.

Preferably, according to a second aspect of the present invention, in the light guide plates arranged in parallel with a predetermined distance therebetween, the width of the light guide plate blocks in both ends of the light guide plate is smaller than the width of the light guide plate blocks in the center of the light guide plate. This increases the brightness in both ends of the light guide plate to prevent the occurrence of uneven brightness in the opposed portions of the two light guide plates and in both ends of the screen.

Preferably, according to the present invention, in the opposed portions of the first and second light guide plates, the light from the first light guide plate is easily input to the second light guide plate, or the light from the second light guide plate is easily input to the first light guide plate. Thus, it is possible to prevent the brightness from being reduced in the opposed portions of the two light guide plates. As a result, the uniformity of the screen brightness can be increased.

Preferably, according to another configuration of the present invention, the width of the light guide plate blocks in both ends of each light guide plate is smaller than the width of the light guide plate blocks in the center of the light guide plate. At this time, the number of LEDs is the same in each light guide plate block. Thus, the brightness in both ends of the light guide plate increases. As a result, it is possible to prevent the occurrence of uneven brightness due to low brightness in the opposed portions of the two light guide plates.

### BRIEF DESCRIPTION OF THE DRAWINGS

Fig. 1 is an exploded perspective view of a liquid crystal display device to which the present invention is applied;
Figs. 2A and 2B are perspective views of a divided light guide plate;
Fig. 3 is a cross-sectional view taken along ling A-A of Fig. 1;
Fig. 4 is a cross-sectional view taken along line B-B of Fig. 1;
Fig. 5 is a top view of a light guide plate according to a first embodiment;
Fig. 6 is a detailed view of the light guide plate according to the first embodiment;
Fig. 7 shows an example of a rough surface;
Fig. 8 shows another example of the rough surface;
Fig. 9 is a first modification of the first embodiment;
Fig. 10 is a second modification of the first embodiment;
Fig. 11 is a third modification of the first embodiment;
Fig. 12 is a fourth modification of the first embodiment;
Fig. 13 is a fifth modification of the first embodiment;
Fig. 14 is a sixth modification of the first embodiment;
Fig. 15 is a detailed view of the light guide plate according to a second embodiment;
Fig. 16 shows an example of a cross-sectional view shown in Fig. 15;
Fig. 17 is a top view of a light guide plate according to a conventional example;
Fig. 18 is a cross-sectional view showing the problem of the light guide plate in the conventional example;
Fig. 19 shows an example of uneven brightness in the conventional example;
Fig. 20 shows an example of the brightness distribution in the conventional example;
Fig. 21 is a schematic screen view showing a bright spot and a halo; and
Fig. 22 is a schematic screen view showing the problem in the conventional example.

### DETAILED DESCRIPTION OF THE PREFERRED EMBODIMENTS

Hereinafter, the present invention will be described in detail with reference to embodiments.

### First Embodiment

Fig. 1 is an exploded perspective view of a liquid crystal display device according to the present invention. In Fig. 1, a TFT substrate 11 and a counter substrate 12 are bonded together through an adhesive material not shown. The TFT substrate 11 includes a display area, scan lines, image signal lines, and the like. The display area of the TFT substrate 11 includes TFTs and pixel electrodes that are arranged in a matrix form. The counter substrate 12 includes color filters and the like. A liquid crystal not shown is interposed between the TFT substrate 11 and the counter substrate 12. The TFT substrate 11 is made larger than the counter electrode 12 so as to form terminals and the like in the TFT substrate 11.

A lower polarization plate 14 is attached to the lower side of the TFT substrate 11, and an upper polarization plate 13 is attached to the upper side of the counter substrate 12. The state in which the TFT substrate 11, the counter substrate 12, the lower polarization plate 14, and the upper polarization plate 13 are bonded together is called a liquid crystal display panel. A backlight is provided on the back side of the liquid crystal display panel. The backlight includes a light source unit and various optical components.

In Fig. 1, the light source unit includes LEDs 30 on a wiring substrate 40. The LEDs 30 are provided in positions corresponding to light guide plate blocks 53. In Fig. 1, two light guide plates are arranged in parallel with a predetermined distance therebetween. This is because when the screen is large, it is more advantageous to divide into a plurality of light guide plates than to form a single large light guide plate, in terms of the production costs of the light guide plate and the like. When two light guide plates 50 are used, they are thermally expanded. The two light guide plates 50 are formed with a predetermined distance therebetween to absorb the thermal expansion.

In Fig. 1, each light guide plate 50 includes four divided light guide plates. The shape of each divided light guide plate 50 is as shown in Fig. 2. Fig. 2 is a perspective view of the divided light guide plate 51. The divided light guide plate 51 is divided into four light guide plate blocks 53 by grooves 52. Each of the light guide plate blocks 53 is separated by the groove 52 to be able to function as an independent light guide plate. An example of the shape of the groove is as shown in the K-K cross section. The cross section has a substantially V shape with a depth dd of about 0.5 mm.

Now referring again to Fig. 1, one light guide plate 50 is formed by combining four divided light guide plates 51 having a rectangular shape. Then, two light guide plates 50 are arranged in parallel with a predetermined distance therebetween. There are three diffusion sheets 15 provided above the light guide plates 50. Each of the diffusion sheets 15 is thin with a thickness of about 60 µm. Thus, the three diffusion sheets 15 are actually placed on the light guide plates 50. The surface of the diffusion sheet 15 provides fine asperities to diffuse the light from the light guide plates 50. In addition, the fine asperities of the surface function as a kind of prism, directing the light diagonally incident on the diffusion sheet 15 toward the liquid crystal display panel.

This embodiment uses three diffusion sheets 15 as an example. However, the number of the diffusion sheets 15 may be one or two, or may be there or more according to the need. Further, in addition to the diffusion sheet 15, a prism sheet may also be provided if necessary. The prism sheet has a function of directing the light diagonally incident from the backlight toward the liquid crystal display panel, to increase the brightness of the screen. In the example of Fig. 1, the diffusion sheet 15 is directly placed on the light guide plates 50. However, depending on the circumstances, a diffusion plate may be provided on the light guide plate 50, and the diffusion sheet 15 may be placed on the diffusion plate.

In Fig. 1, the liquid crystal display panel is provided on the top of the diffusion sheets 15. Even after the assembly, the liquid crystal display panel and the diffusion sheet are kept separated, for example, at a distance of about 50 µm. This prevents the diffusion sheet 15 and the lower polarization plate 14 from rubbing against each other and being damaged.

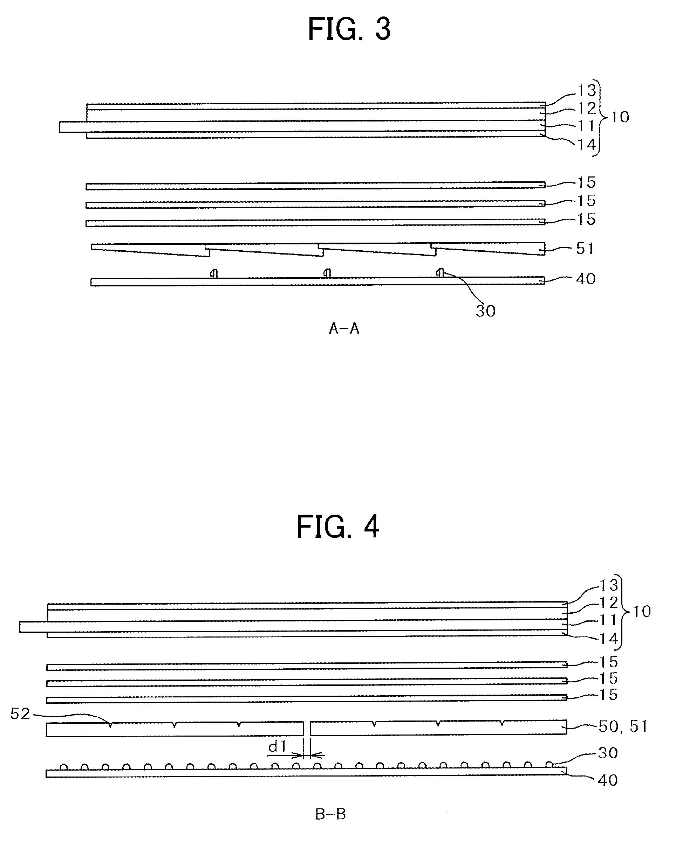

Fig. 3 is an exploded cross-sectional view taken along line A-A of the liquid crystal display device shown in Fig. 1. In Fig. 3, the configuration of a liquid crystal display panel 10 and the three diffusion sheets 15 is as described in Fig. 1. In Fig. 3, the light guide plate 50 is provided below the diffusion sheets 15. The light guide plate 50 includes four divided light guide plates 51. As described in Fig. 1, each of the divided light guide plates 51 further includes four light guide plate blocks 53.

The cross section of each divided light guide plate 51 has a wedge shape with thick and thin portions. The thick portion is about 3 mm and the thin portion is less than 1 mm. The thin portion of the divided light guide plate 51 enters a step portion formed in the thick portion of the anterior divided light guide plate 51. Thus, the divided light guide plates look like a single light guide plate as a whole.

In Fig. 3, the light guide plate 50 is placed on a wiring substrate 40 including the LEDs 30 to be provided on the lower side of the light guide plate 50. In other words, the LEDs 30 are provided on the side surface of the thick portion of the cross section of each divided light guide plate 51. The light of the LED 30 is input from the side surface of the thick portion of the divided light guide plate 51 to the light guide plated 50. Then, the light is directed to the liquid crystal display panel 10 and is output from the light guide plate 50.

Fig. 4 is an exploded cross-sectional view taken along line B-B of the liquid crystal display device shown in Fig. 1. In Fig. 4, two light guide plates 50 are arranged in parallel with a distance d1 therebetween. Each light guide plate 50, namely, each divided light guide plate 51, is divided into the light guide plate blocks 53 by the grooves 52. Three LEDs of the plurality of LEDs on the wiring substrate 40 correspond to each of the light guide plate blocks 53, respectively.

In Fig. 4, the two light guide plates 50 are arranged with the distance d1 therebetween. However, the influence of this distance leads to the problems to be solved as described above, such as the uneven brightness and the discomfort of images in video. In this embodiment, the end portion of each light guide plate 50 has a particular shape in order to solve these problems.

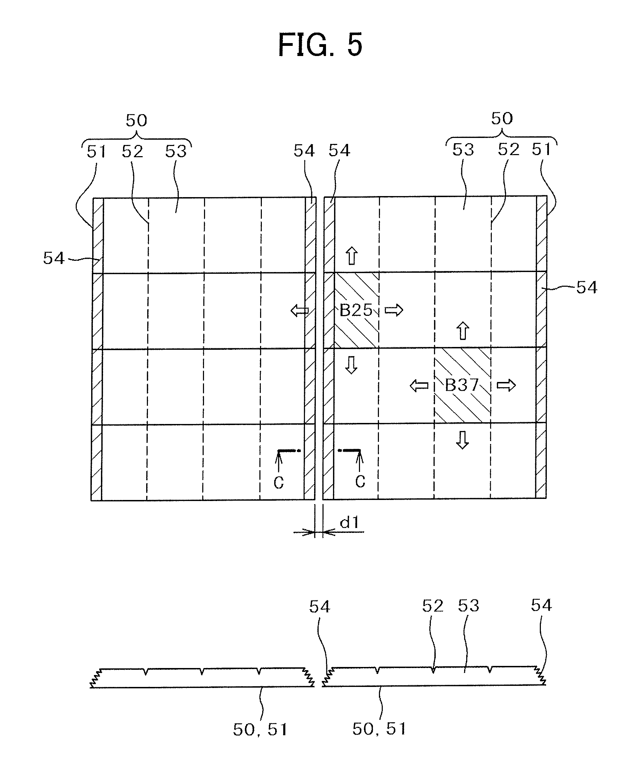

Fig. 5 shows the shape of the light guide plate 50 according to the first embodiment. In Fig. 5, the two light guide plates 50 are arranged in parallel with the distance d1 therebetween. Each light guide plate 50 includes four divided light guide plates 51. Each divided light guide plate 51 includes four light guide plate blocks 53. An inclined portion is formed on both ends of the light guide plate 50. The inclined portion has a rough surface 54.

Since each of the opposed end portions of the two light guide plates 50 is inclined and has the surface 54 formed thereon, light interference easily occurs between the two light guide plates 50. As a result, it is possible to eliminate or reduce the uneven brightness due to the presence of the distance d1 between the two light guide plates 50. Similarly, each of the outside ends of the light guide plates 50 is inclined and has the rough surface 54 formed thereon. Thus, the uneven brightness can also be eliminated in both ends of the screen.

In Fig. 5, when the light guide plate block denoted by B37 is bright, the light leaks into the surrounding light guide plate blocks. In the case of the light guide plate block denoted by B25 formed on the end of the light guide plate 50, the light leaks from the B25 light guide plate block into the neighboring light guide plate blocks 53, and also into the light guide plate block 53 of the adjacent light guide plate 50. In this way, it is possible to eliminate the vertical stripe uneven brightness in the center of the screen when a white screen is displayed. In addition, it is also possible to eliminate the discomfort that occurs when the video is displayed on the screen.

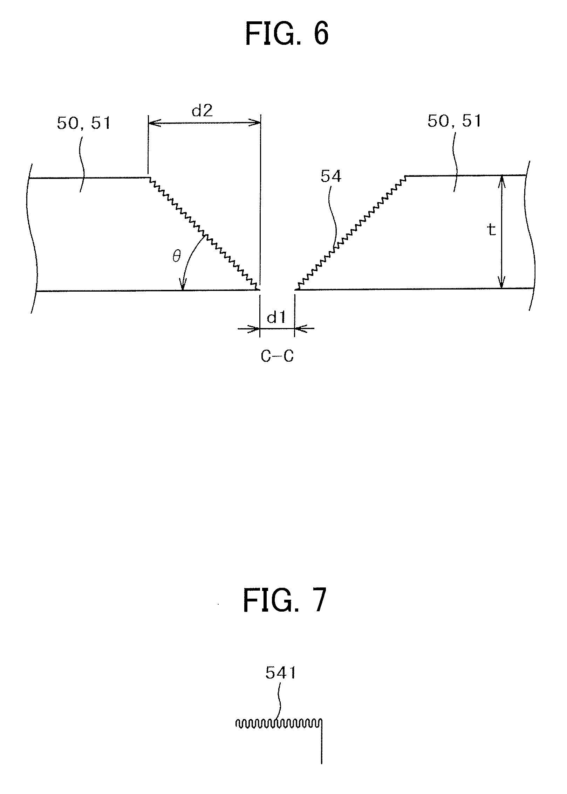

Fig. 6 is a detailed cross-sectional view of the ends of the light guide plates 50 facing each other. In Fig. 6, the two light guide plates 50 face each other with the distance d1 therebetween. It is to be noted that the reflective sheet, which is provided below the light guide plates 50, is omitted in Fig. 6 and the following figures. The end of the light guide plates 50 is inclined with the rough surface 54 formed thereon. In Fig. 6, the length d2 of the rough surface 54 in the plane direction is sufficiently larger than d1. Preferably, d2 is ten times or more the distance d1.

In Fig. 6, the thickness t of the light guide plate 50 is 1 to 5 mm, and the distance between the two light guide plates 50 is 0.2 to 0.5 mm. When the length of d2 is set to ten times or more the distance d1 with the dimensions described above, the inclined angle θ is about 20 to 70 degrees. With this range of angles, there is a further advantage that it is easy to form the inclination on the side surfaces of the light guide plates 50.

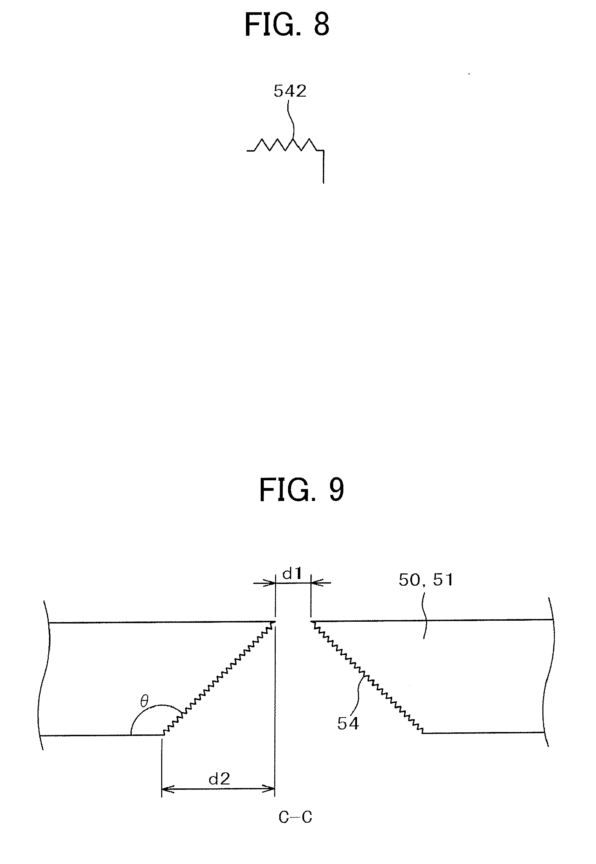

The rough surface of the inclined portion shown in Fig. 6 may be formed by various methods. Fig. 7 is an example of a cross section shape 541 of the rough surface. Such a surface can be formed by a sandblast process. Fig. 8 is an example in which the rough surface has a prism shape 542. For example, the rough surface 542 may be formed at the same time when the light guide plate is press formed. The prism may be a conical or linear prism. Further, the rough surface may also be formed using a convex or concave microlens. In this case also, the rough surface can be formed at the same time when the light guide plate is press formed. It is to be noted that the other ends of the two light guide plates 50 have also the same shape.

Fig. 9 shows a first modification of this embodiment. In Fig. 9, the ends of the light guide plates 50 facing each other are inclined in the reverse direction of the inclined surfaces in Fig. 6, respectively. Even if the inclined surface is inclined in the reverse direction as shown in Fig. 9, the effect for the uneven brightness is the same. In Fig. 9, d2 is preferably ten times or more the distance d1. Thus, in Fig. 9, the angle θ is preferably 110 to 160 degrees. It is to be noted that the other ends of the two light guide plates 50 have also the same shape.

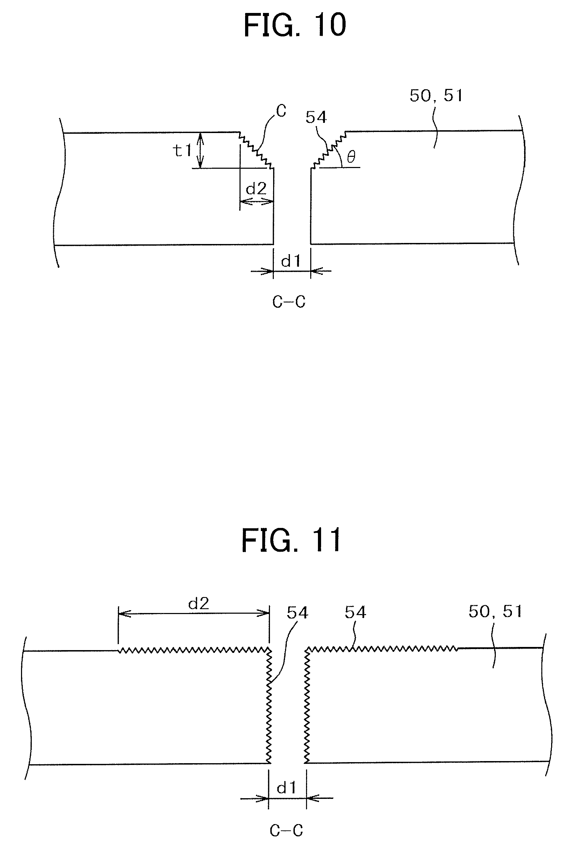

Fig. 10 shows a second modification of this embodiment. In Fig. 10, the ends of the light guide plates 50 facing each other are chamfered. Then, the rough surface 54 is formed on each of the chamfered portions. The rough surface 54 may have the shape shown in Fig. 7 or 8 as descried with reference to Fig. 6. Also in the case of the shape shown in Fig. 10, it is preferable that the length d2 of the rough surface 54 in the plane direction of the light guide plate 50 is sufficiently larger than the distance d1 between the two light guide plates 50. The chamfering angel θ is 45 degrees. It is necessary to define the chamfering amount t1 so that d2 is sufficiently larger than d1. It is to be noted that the other ends of the two light guide plates 50 have also the same shape.

Fig. 11 shows a third modification of this embodiment. In Fig. 11, the two light guide plates 50 face each other with the distance d1 therebetween. In each of the opposed portions of the light guide plates 50, the rough surface 54 is formed on the side surface and on the flat surface end portion. Preferably, the length d2 of the rough surface 54 on the flat surface end portion is ten times or more the distance d1 between the two light guide plates 50. In Fig. 11, the rough surface 54 on the side surface can be formed by sandblasting. It is to be noted that the other ends of the two light guide plates 50 have also the same shape.

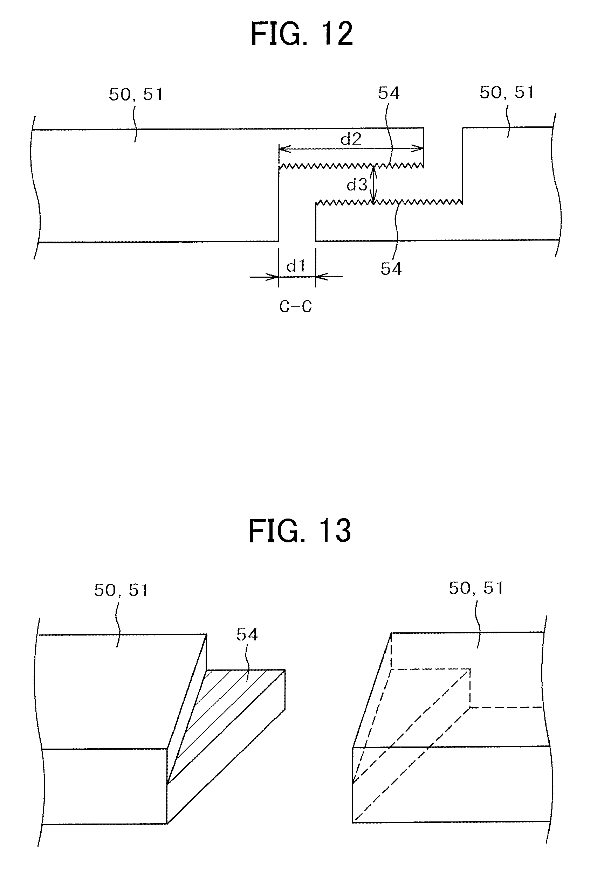

Fig. 12 shows a fourth modification of this embodiment. In Fig. 1, the canopies (projections) are formed in the opposed portions of the two light guide plates 50 so as to overlap in the plane direction of the two light guide plates 50. In Fig. 12, the bottom surface of the upper canopy has the rough surface 54, and the upper surface of the lower canopy has the rough surface 54. It is to be noted that the upper surface of the lower canopy must have the rough surface, while the lower surface of the upper canopy may not have the rough surface.

The distance between the two light guide plates 50 is denoted by d1. The length d2 of the rough surface in the canopy is preferably ten times or more the distance d1. Further, it is preferable that the distance d3 between the two light guide plates 50 in the vertical direction is approximately the same as the distance d1 in the plane direction. This setting is important because if the two light guide plates 50 come into contact vertically, the light guide plates 50 would be inclined, and a predetermined brightness distribution of the backlight may not be obtained.

Fig. 13 shows a fifth modification of this embodiment. In Fig. 13, triangular canopies (projections) are formed in the opposed surfaces of the two light guide plates 50. The upper surface of the triangular canopy of one light guide plate 50 has the rough surface 54. Further, the lower surface of the triangular canopy of the other light guide plate 50 has the rough surface 54. This shape has the advantage of increasing the area of the opposed surfaces of the two light guide plates 50. It is to be noted that the lower surface of the canopy of the other light guide plate 50 may not have the rough surface. In Fig. 13, when the two light guide plates 50 are arranged in parallel, the distances in the horizontal and vertical directions are 0.2 to 0.5 mm, similarly to the distances in Fig. 12.

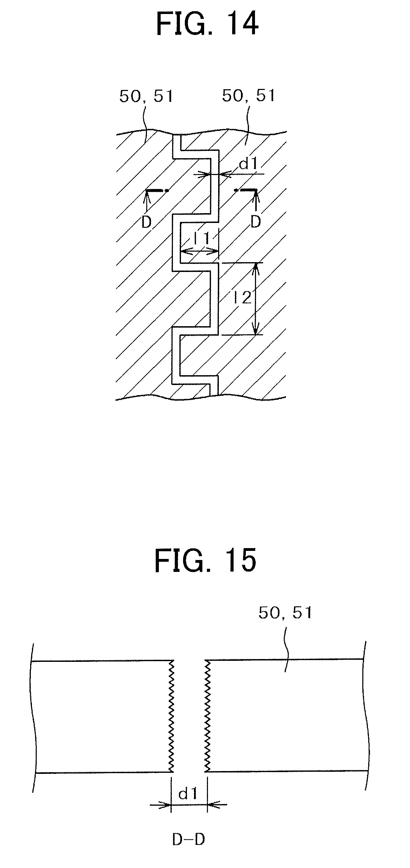

Fig. 14 shows a sixth modification of this embodiment. In Fig. 14, the opposed surfaces of the two light guide plates 50 have a crank-like shape. In the crank-like shaped end portions of the two light guide plates 50, a projection of one light guide plate is nested within a recess of the other light guide plate. The distance d1 between the two light guide plates 50 in this embodiment is 0.2 to 0.5 mm. In Fig. 14, the crank-like shape has dimensions of 1 to 10 mm in 11 and 5 to 10 mm in 11.

Because of the crank-like shape of the opposed portions of the two light guide plates 50, the area of the opposed portions of the two light guide plates 50 increases, and the light interference between the two light guide plates 50 also increases. As a result, it is possible to improve the uneven brightness in the center area of the screen. In addition, the crank-like shape of the opposed flat surfaces of the two light guide plates 50 disperses the dark portion caused by the distance d1. Thus, the uneven brightness is not visible.

Fig. 15 is a cross-sectional view taken along line D-D of Fig. 14. In Fig. 15, the opposed surfaces of the light guide plates 50 have a rough surface. Such rough surfaces can be formed by sandblasting. The configuration shown in Fig. 14 can be combined with the configurations of Figs, 6, 9, 10, 11, and 12. In this case, it is possible to further reduce the uneven brightness by combining these configurations.

### Second Embodiment

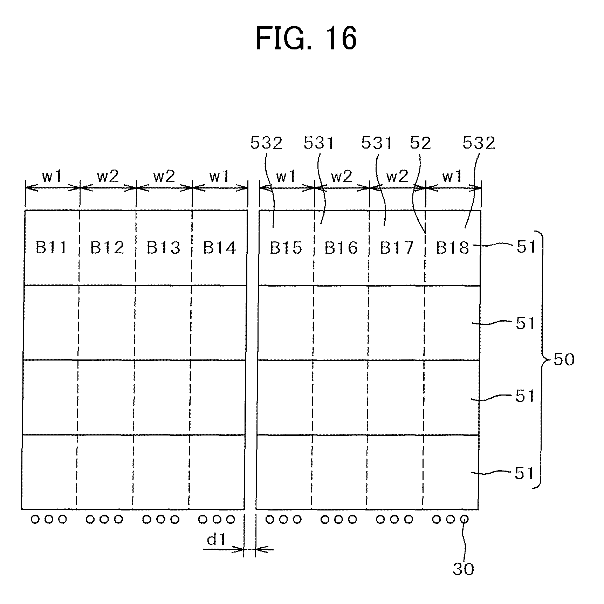

Fig. 16 is a top view of the light guide plates 50 according to a second embodiment of the present invention. The general configuration of the liquid crystal display device of the second embodiment is the same as the configuration of the liquid crystal display device shown in Fig. 1. In Fig. 16, two light guide plates 50 are arranged in parallel with the distance d1 therebetween. The distance d1 is 0.2 to 0.5 mm. One light guide plate 50 shown in Fig. 4 includes four divided light guide plates 51. Each divided light guide plate 51 is divided into four light guide plate blocks 53 by the grooves 52.

The feature of this embodiment is that the widths of the four light guide plate blocks 53 in the divided light guide plate 51 are different. The width w1 of the light guide plate blocks 532 provided in both ends of the divided light guide plate 51 is smaller than the width w2 of the light guide plate blocks 531 provided in the center of the divided light guide plate 51. The light guide plate blocks 531 and 532 are provided with three LEDs, respectively. Thus, the brightness of the light guide plate blocks 532 on both ends of each light guide plate 50 increases. In each of the opposed portions of the two light guide plates 50, the greater the brightness of the light guide plate block 532 of one light guide plate 50, the greater the amount of light emitted to the other light guide plate 50 through the distance d1. As a result, it is possible to reduce the vertical stripe portion of low brightness in the center of the screen.

In Fig. 16, the width w1 of the light guide plate blocks 532 in the outside ends of the two juxtaposed light guide plates 50 is also smaller than the width w2 of the other light guide plate blocks 531. Thus, the brightness of the light guide plate blocks 531 in the outside ends is larger than the brightness of the other light guide plate blocks 532. As a result, it is possible to reduce the problem of low brightness on both ends of the screen.

The configuration of this embodiment can be combined with the configurations shown in Fig. 1 to further reduce the uneven brightness.

As described above in the exemplary embodiments of the present invention, the two light guide plates 50 are formed by combining the divided light guide plates 51 and are arranged in parallel to each other. However, the present invention is not limited thereto and may be applied to the case in which three or more light guide plates 50 are arranged in parallel.

## Claims

1. A liquid crystal display device comprising a liquid crystal display panel, a first light guide plate, a second light guide plate, and LED light sources,
wherein the first and second light guide plates include a plurality of divided light guide plates,
wherein the divided light guide plate is divided into a plurality of light guide plate blocks,
wherein each of the plurality of light guide plate blocks is provided with LEDs,
wherein the first and second light guide plates are arranged in parallel with a distance therebetween,
wherein in the first and second light guide plates, opposed side surfaces of the first and second light guide plates are inclined to one another, and
wherein the inclined surfaces are roughened.

2. The liquid crystal display device according to claim 1, wherein the angle of the inclined surfaces is 20 to 70 degrees.

3. The liquid crystal display device according to claim 1, wherein the angle of the inclined surfaces is 110 to 160 degrees.

4. A liquid crystal display device comprising a liquid crystal display panel, a first light guide plate, a second light guide plate, and LED light sources,
wherein the first and second light guide plates include a plurality of divided light guide plates,
wherein the divided light guide plate is divided into a plurality of light guide plate blocks,
wherein each of the plurality of light guide plate blocks is provided with LEDs,
wherein the first and second light guide plates are arranged in parallel with a distance therebetween,
wherein in the first and second light guide plates, opposed side surfaces of the first and second light guide plates are chamfered, and
wherein the chamfered portions have a rough surface.

5. A liquid crystal display device comprising a liquid crystal display panel, a first light guide plate, a second light guide plate, and LED light sources,
wherein the first and second light guide plates include a plurality of divided light guide plates,
wherein the divided light guide plate is divided into a plurality of light guide plate blocks,
wherein each of the plurality of light guide plate blocks is provided with LEDs,
wherein the first and second light guide plates are arranged in parallel with a distance d1 therebetween,
wherein in the first and second light guide plates, opposed side surfaces of the first and the second light guide plates are roughened, and
wherein in the first and second light guide plates, surfaces extending from the side surfaces in the horizontal direction on the side of the liquid crystal display panel are roughened over a predetermined distance d2.

6. The liquid crystal display device according to claim 5, wherein d2 is ten times or more the distance d1.

7. A liquid crystal display device comprising a liquid crystal display panel, a first light guide plate, a second light guide plate, and LED light sources,
wherein the first and second light guide plates include a plurality of divided light guide plates,
wherein the divided light guide plate is divided into a plurality of light guide plate blocks,
wherein each of the plurality of light guide plate blocks is provided with LEDs,
wherein the first and second light guide plates are arranged in parallel with a distance therebetween,
wherein in opposed portions of the first and second light guide plates, the first light guide plate has a first projection in the direction of the second light guide plate, and the second light guide plate has a second projection in the direction of the first light guide plate,
wherein the first and second projections are seen overlapping each other when viewed from the top,
wherein the first and second projections are provided with a distance therebetween, and
wherein in the first or second projection, an upper side of the projection provided on a lower side has a rough surface.

8. The liquid crystal display device according to claim 7, wherein opposed surfaces of the first and second projections are roughened.

9. The liquid crystal display device according to claim 7, wherein the projection has a flat surface of a triangular shape.

10. A liquid crystal display device comprising a liquid crystal display panel, a first light guide plate, a second light guide plate, and LED light sources,
wherein the first and second light guide plates include a plurality of divided light guide plates,
wherein the divided light guide plate is divided into a plurality of light guide plate blocks,
wherein each of the plurality of light guide plate blocks is provided with LEDs,
wherein the first and second light guide plates are arranged in parallel with a distance therebetween,
wherein in opposed surfaces of the first and second light guide plates, a side surface of the first light guide plate has projections and recesses arranged in a crank-like shape when viewed from the top, and a side surface of the second light guide plate has projections and recesses arranged in a crank-like shape when viewed from the top,
wherein the crank-like shaped projections and recesses of the first and second light guide plates are arranged so that each projection of the side surface of the first light guide plate is nested within each recess of the side surface of the second light guide plate, and
wherein the crank-like shaped side surfaces are arranged at a predetermined distance from each other.

11. The liquid crystal display device according to claim 9, wherein in the opposed portions of the first and second light guide plates, the side surfaces of the first and second light guide plates are roughened.

12. The liquid crystal display device according to claim 1, wherein the rough surfaces are formed by sandblasting.

13. The liquid crystal display device according to claim 1, wherein the rough surfaces are formed by a linear or conical prism or by a convex or concave microlens.

14. A liquid crystal display device comprising a liquid crystal display panel, a first light guide plate, a second light guide plate, and LED light sources,
wherein the first and second light guide plates include a plurality of divided light guide plates,
wherein the divided light guide plate is divided into a plurality of light guide plate blocks,
wherein each of the plurality of light guide plate blocks is provided with LEDs,
wherein the first and second light guide plates are arranged in parallel with a distance therebetween,
wherein each of the first and second light guide plates includes light guide plate blocks on both ends, and other light guide plate blocks in a center area,
wherein the width of the light guide plate blocks on both ends is smaller than the width of the light guide plate blocks in the center area, and
wherein the number of LEDs provided in the light guide plate blocks on both ends is the same as the number of LEDs provided in the light guide plate blocks in the center area.
